(19) Europäisches Patentamt

European Patent Office

Office européen des brevets

(11) Veröffentlichungsnummer: **0 320 693 B1**

(12) **EUROPÄISCHE PATENTSCHRIFT**

(45) Veröffentlichungstag der Patentschrift: **16.09.92**

(21) Anmeldenummer: **88119858.4**

(22) Anmeldetag: **29.11.88**

(51) Int. Cl.⁵: **H01M 10/39**

(54) **Elektrochemische Speicherzelle.**

(30) Priorität: **05.12.87 DE 3741238**

(43) Veröffentlichungstag der Anmeldung:
**21.06.89 Patentblatt 89/25**

(45) Bekanntmachung des Hinweises auf die
Patenterteilung:
**16.09.92 Patentblatt 92/38**

(84) Benannte Vertragsstaaten:
**DE FR GB**

(56) Entgegenhaltungen:
**EP-A- 0 141 353       EP-A- 0 142 030
DE-A- 2 253 299       DE-A- 2 819 027
GB-A- 1 452 482       GB-A- 1 496 407
US-A- 3 953 227**

(73) Patentinhaber: **Asea Brown Boveri Aktiengesellschaft
Kallstadter Strasse 1
W-6800 Mannheim 31(DE)**

(72) Erfinder: **Knödler, Reinhard, Dr.
Lattweg 17
W-6902 Sandhausen(DE)**
Erfinder: **Krapf, Rudolf
Erlenweg 5
W-6906 Leimen(DE)**
Erfinder: **Bansemir, Werner
Eichenweg 16
W-6905 Schriesheim(DE)**

(74) Vertreter: **Rupprecht, Klaus, Dipl.-Ing. et al
c/o Asea Brown Boveri Aktiengesellschaft
Zentralbereich Patente Postfach 100351
W-6800 Mannheim 1(DE)**

## Beschreibung

Die Erfindung bezieht sich auf eine elektrochemische Speicherzelle gemäß dem Oberbegriff des Patentanspruches 1.

Solche elektrochemische Speicherzellen eignen sich gut zum Aufbau von Hochtemperatur-Speicherbatterien, die als Energiequellen von Elektrofahrzeugen vorgesehen sind. Ein Beispiel hierfür sind wiederaufladbare Speicherzellen auf der Basis von Natrium und Schwefel, die einen Festelektrolyten aus Betaaluminiumoxid besitzen, der den Anodenraum vom Kathodenraum trennt. Ei Vorteil dieser elektrochemischen Speicherzellen besteht darin, daß beim Laden kein elektrochemischen Nebenreaktionen auftreten. Der Grund dafür ist, daß nur Natriumionen durch den Festelektrolyten gelangen können. Die Stromausbeute einer solchen Natrium/Schwefel-Speicherzelle liegt daher bei 100 %.

Aus der DE-A-28 19 027 ist eine elektrochemische Speicherzelle bekannt, deren Gehäuse und deren Festelektrolyt becherförmig ausgebildet sind. Sowohl der Festelektrolyt als auch die in ihm angeordnete Kartusche weisen beide einen nach außen gerichteten Flansch auf. Der Flansch des Festelektrolyten ist auf einem nach außen gerichteten Flansch des Gehäuses abgestützt, während der Flansch der Kartusche auf dem Flansch des Festelektrolyten auf dem Flansch des Festelektrolyten aufsitzt. Zwischen den Flanschen ist jeweils ein Dichtungsring aus Aluminium angeordnet.

In der US-A-39 53 227 ist eine elektrochemische Speicherzelle beschrieben, die becherförmig ausgebildet ist. Sie verfügt über einen ebenso geformten Festelektrolyten, der im Verschlußbereich der Speicherzelle außen von einem Dichtungsring umgeben ist, der aus einem Elastomer gefertigt ist. Die Verschlußelemente des Gehäuses sind um den flanschlosen Öffnungsbereich des Festelektrolyten angeordnet. Das Natrium ist direkt in den Festelektrolyten ohne Verwendung einer Kartusche eingefüllt.

Aus der GB-A-14 96 407 ist eine becherförmige Speicherzelle bekannt. Der ebenso geformte Festelektrolyt ist flanschlos ausgebildet. In sein Inneres ragt ein Stromabnehmer hinein. Sowohl der Stromabnehmer als auch der Rand des Festelektrolyten werden von Verschlußelementen mit nach unten weisenden Flanschteilen umschlossen. Im Öffnungsbereich des Festelektrolyten ist eine Dreikomponentendichtung bestehend aus mehreren Schichten unmittelbar angeordnet. Der Kathodenraum mit dem Schwefel ist innerhalb des Festelektrolyten angeordnet, während sich das Natrium zwischen dem Festelektrolyten und dem Gehäuse der Speicherzelle befindet. Es handelt sich hierbei um eine inverse Speicherzelle.

In der EP-A-01 41 353 ist eine elektrochemische Speicherzelle mit becherförmigem Gehäuse und ebenso geformten Festelektrolyt beschrieben. In dem Festelektrolyt ist eine mit nach außen weisenden Flansch versehene Kartusche gesteckt, deren Flansch auf dem Flansch des Festelektrolyten abgestützt ist. Um eine elektrisch leitende Verbindung zwischen dem Deckel der Speicherzelle und der Kartusche zu verhindern, ist zwischen beiden Bauelementen eine isolierende elastische Scheibe angeordnet.

Aus der DE-A-33 40 424 ist eine elektrochemische Speicherzelle bekannt, bei der der Festelektrolyt im Verschlußbereich mit einem Alphaaluminiumoxidring verbunden ist. Die Verbindung dieses Isolierrings mit den metallischen Bauelementen, welche den Verschluß der Speicherzellen bilden, erfolgt durch Thermokompression. Hierdurch wird eine mechanisch starre Verbindung zwischen dem Festelektrolyten und dem Gehäuse bewirkt. Sämtliche auftretenden Zug- und Druckkräfte werden dadurch über den angeglasten Isolierring auf den Festelektrolyten übertragen, was sehr häufig die Ursache für einen Keramikbruch ist.

Der Erfindung liegt deshalb die Aufgabe zugrunde, eine Speicherzelle aufzuzeigen, beider die Abdichtung zwischen dem Gehäuse und dem Festelektrolyten gegen mechanische und thermische Belastungen beständig ist.

Diese Aufgabe wird erfindungsgemäß durch die Merkmale des Patentanspruches 1 gelöst.

Durch die Verwendung von elastischen Dichtungselementen werden Zug- und Druckkräfte sowie thermische Belastungen von dem Festelektrolyten ferngehalten, wodurch seine Lebensdauer erhöht wird. Das verwendete flexible Material ist gegen die Einwirkungen von Polysulfid unempfindlich und behält zudem für die gesamte Lebensdauer der Speicherzelle seine Elastizität bei. Durch zusätzliche konstruktive Maßnahmen und die Verwendung von zusätzlichen Dichtungselementen aus Graphit kann sichergestellt werden, daß die aus dem Polyfluorelastomer hergestellten Dichtungselemente gegen die Einwirkungen von Natrium vollständig geschützt sind.

Weitere erfindungswesentliche Merkmale sind in den Unteransprüchen gekennzeichnet.

Die Erfindung wird nachfolgend anhand von Zeichnungen erläutert.

Es zeigen:

Figur 1: Einen Vertikalschnitt durch eine Speicherzelle mit elastischen Dichtungs- und Verbindungselementen,

Figur 2: eine Variante, der in Figur 1 dargestellten Speicherzelle,

Figur 3: eine weitere Ausführungsform der Speicherzelle nach Figur 1.

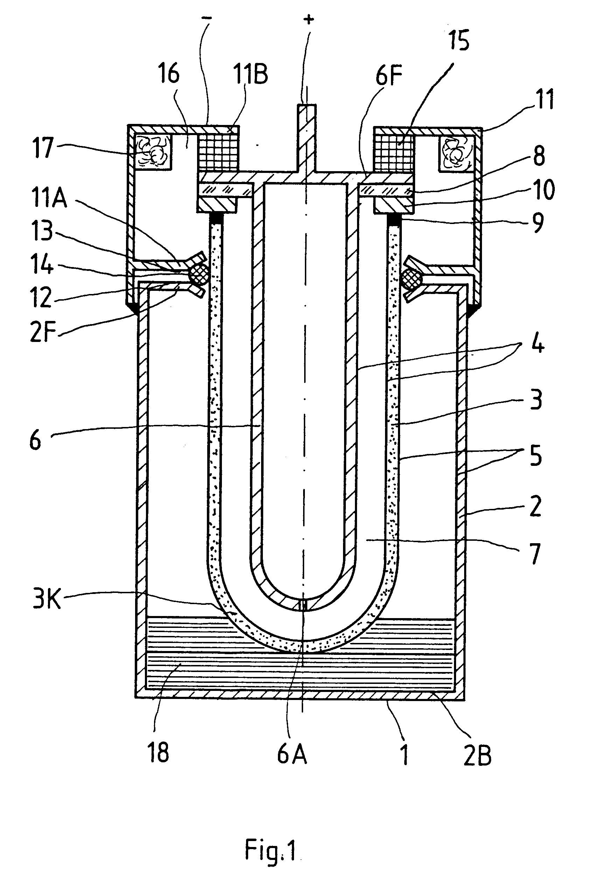

Figur 1 zeigt eine elektrochemische Speicherzelle 1, die im wesentlichen durch ein becherförmiges Gehäuse 2 und einen Festelektrolyten 3 gebildet wird. Die Abmessungen des Festelektrolyten 3 sind so gewählt, daß zwischen der Innenfläche des Gehäuses 2 und der Außenfläche des Festelektroylten 3 ein zusammenhängender Zwischenraum gebildet wird, der als Kathodenraum dient. Das Innere des Festelektrolyten 3 wird als Anodenraum 5 genutzt. Eine Kartusche 6, die das Natrium enthält, ist in den Festelektrolyten 3 eingesetzt. Die Abmessungen der Kartusche 6 sind so gewählt, daß zwischen den Innenflächen des Festelektrolyten 3 und den Außenflächen der Kartusche 6 rundum ein schmaler Spalt 7 verbleibt, der immer mit Natrium gefüllt ist. Dieses fließt über eine Öffnung 6A, aus der Kartusche 6 in diesen Spalt 7. Der Kathodenraum 5 ist mit einem Filz, bspw. aus Graphit gefüllt, der mit Schwefel getränkt ist. Die in dem Festelektrolyten 3 angeordnete Kartusche 6 weist einen nach außen gerichteten Flansch 6F auf. Dieser ist auf dem Rand des Festelektrolyten 3 abgestützt. Um eine Abdichtung des Anodenraums 4, insbesondere des Spaltes 7 sicherzustellen, ist auf der Unterseite des Flansches 6F ein Graphitfilz 8 angeordnet, der mindestens so breit ist wie die Unterseite des Flansches 6F. Um eine Selbstentladung der Speicherzelle 1 zu verhindern, ist der Rand des Festelektrolyten 3 von einer Glasschicht 9 überzogen, auf der ggf. eine zusätzliche Isolierschicht 10 angeordnet ist. Durch diese beiden Maßnahmen wird eine elektrisch leitende Verbindung zwischen dem Festelektrolyten 3 und dem Graphitfilz 8 unterbunden. Der Verschluß des Gehäuses 2 nach außenhin erfolgt mit Hilfe eines zylinderförmigen Verschlußelementes 11. Dieses ist mit zwei nach innen gerichteten Flanschen 11A und 11B versehen. Das Gehäuse der Speicherzelle 2 weist am offenen Ende ebenfalls einen nach innen gerichteten Flansch 2F auf. Der erste Flansch 11A des Verschlußelementes 11 ist auf den Flansch 2F aufgesetzt. Die freien Enden der beiden Flansche 2F und 11A sind zur Ausbildung einer V-förmigen Rinne 13, nach unten bzw. nach oben gebogen. In dieser Rinne 13 ist das Dichtungselement 14 angeordnet, das aus einem Elastomer, vorzugsweise einem Perfluorelastomer gefertigt ist. Durch die beiden Flansche 2F und 11A wird das Dichtungselement 14 an die Außenwand des Festelektrolyten 3 gepresst, wodurch der unter dem Flansch 2F liegende Kathodenraum 5 nach außenhin verschlossen wird. Die Abmessungen des zylinderförmigen Verschlußelementes 11 sind so bemessen, daß sein Innendurchmesser geringfügig größer ist als der Außendurchmesser des Gehäuses 2. Hierdurch ist es möglich, daß die seitlichen Begrenzungsflächen des Verschlußelementes 11 das obere Ende des Gehäuses 2 hüllenartig umgeben und mit der Außenfläche des Gehäuses 2 dauerhaft verbunden sind. Der zweite Flansch 11B des Verschlußelementes 11 ist über ein zweites Dichtungselement 15 in Form eines Ringes auf die Oberfläche des Flansches 6F der Kartusche 6 aufgesetzt. Vor der dauer-haften Verbindung des Verschlußelementes 11 mit dem Gehäuse 2 wird die Dichtung 15 zunächst in Richtung der Längsachse der Speicherzelle 1 zusammengepreßt, um einen optimalen Verschluß der Speicherzelle zu erreichen. Die Dichtung 15 ist ebenfalls aus einem Perfluorelastomer gefertigt. Durch die beiden Dichtungen 14 und 15 wird ein hermetisch abgeschlossener Innenraum 16 zwischen dem Verschlußelement 11 und dem Festelektrolyten 3 gebildet. Um eine Anreicherung dieses Raumes mit Natriumdämpfen zu verhindern, wird in dem Raum 16 ein Natriumabsorber 17 angeordnet. Zwischen dem Boden 2B des Gehäuses 2 und der abgerundeten Kuppe 3K des Festelektrolyten 3 ist ein Graphitfilz 18 angeordnet, der die Kuppe 3K umschließt und als Zentriereinrichtung dient.

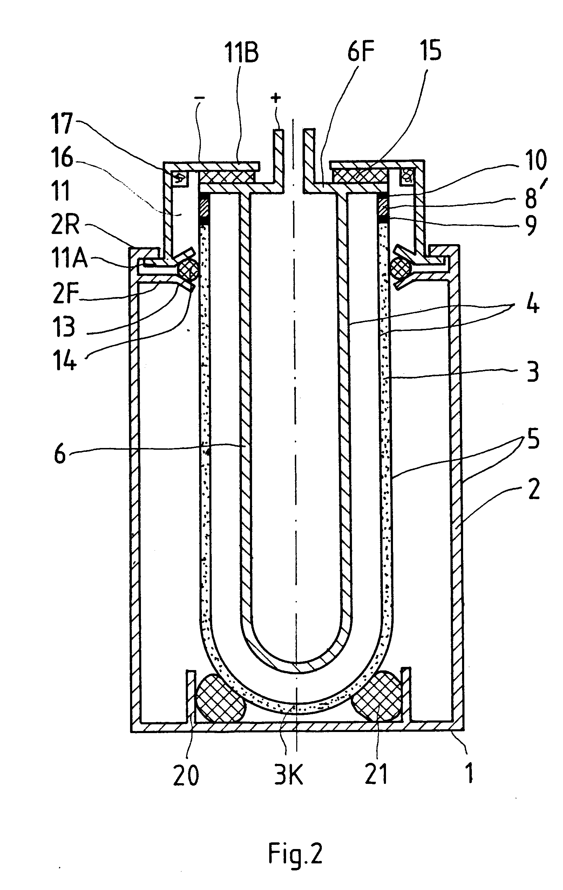

Die in Figur 2 dargestellte Speicherzelle weist die gleichen Bauelemente 2, 3, 4, 5, 6 und 11 auf wie die in Figur 1 dargestellte Speicherzelle. Der Festelektrolyt 3 ist an seinem Rand mit einem Isolierring 8' aus Alphaaluminiumoxid verbunden, der sehr dünnwandig ist. Die Verbindung des Isolierringes 8' mit dem Festelektrolyten erfolgt hierbei durch ein Bondverbindung, wofür direkt auf den Rand des Festelektrolyten 3 ein Ring 9 aus Aluminium angeordnet ist. Auf dem Isolierring 8 selbst ist ein weiterer Ring 10 aus Aluminium angeordnet. Der Flansch 6F der Kartusche 6 ist auf diesen Ring 10 aufgesetzt und durch Bonden mit dem Festelektrolyten 3 dauerhaft verbunden. Das Gehäuse 2 weist am oberen Ende einen ersten nach innen gerichteten Flansch 2F auf. Dieser ist bis fast zum Festelektrolyten hin geführt, wobei sein freies Ende geringfügig nach unten gebogen ist. Auf diesen Flansch 2F ist ein nach innen und außen weisender erster Flansch des Verschlußelementes 11 aufgesetzt. Das freie Ende des nach innen weisenden Flanschteiles 11A ist bis fast an den Festelektrolyten 3 herangeführt. Zur Ausbildung einer V-förmigen Rinne 13 zusammen mit dem Flansch 2F ist sein Ende geringfügig nach oben gebogen. In der V-förmigen Rinne 13 ist ein Dichtungselement 14 angeordnet, das aus einem Elastomer, vorzugsweise einem Perfluorelastomer hergestellt ist. Die als Ring ausgebildete Dichtung 14 wird durch die beiden Flansche 2F und 11A zusätzlich gegen die Außenwand des Festelektrolyten 3 gepreßt. Hierdurch wird eine vollständige Abdichtung des Kathodenraums 5 nach außenhin sichergestellt. Das Gehäuse 2 ist mit einem zweiten nach innen weisenden Flansch 2R versehen, der einige Millimeter über dem ersten Flansch 2F angeordnet ist. Der Abstand zwischen beiden ist so gewählt, daß der Flansch 11A des Verschlußelementes 11 zwischen beide eingefügt werden kann, und der Flansch 2R zusätzlich auf dem Flansch 11A aufsitzt. Der zweite nach innen gerichtete Flansch 11B des Verschlußelementes 11 ist über ein Dichtungselement 15 auf den Flansch 6F der Kartusche 6 aufgesetzt.

Das Dichtungselement 15 ist als Ring ausgebildet, und aus einem Perfluorelastomer gefertigt. Bei der Herstellung der Speicherzelle 1 wird die Dichtung 15 zur Erzielung einer vollständigen Abdichtung der Speicherzelle 1 nach außen in axialer Richtung der Speicherzelle 1 gepreßt. Um für den Festelektrolyten 3 trotz der Verwendung von elastischen Dichtungselementen im Verschlußbereich die erforderliche Abstützung und Zentrierung sicherzustellen, ist zwischen der runden Kuppe 3K des Festelektrolyten 3 und dem Boden des Gehäuses 2 eine als Zylinder ausgebildete Zentriereinrichtung 20 angeordnet, die mit dem Boden der Speicherzelle fest verbunden ist. In ihr ist ein als Ring ausgebildetes Abstützelement 21 aus einem elastischen Material angeordnet. Auf ihm ist die runde Kuppe 3K des Festelektrolyten abgestützt. In dem Ringraum 16, der durch die beiden nach innen weisenden Flansche 11A und 11B des Verschlußelementes 11 gebildet wird, ist wiederum ein Natrimabsorber 17 angeordnet, um die Dichtungen 14 und 15 vor den Einflüssen des möglicherweise aus dem Anodenraum 4 austretenden Natriumdampfes zu schützen.

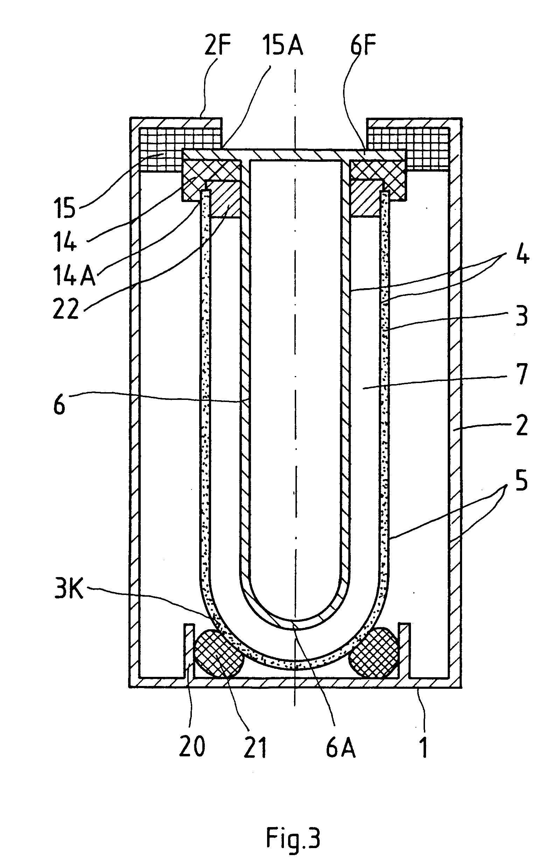

Figur 3 zeigt eine weitere Speicherzelle 1, die ebenso wie die Speicherzellen 1 nach den Figuren 2 und 3 die Bauelemente 2, 3, 4, 5 und 6 aufweist. Der Flansch 6F der Kartusche 6 ist über ein Dichtungselement 14 auf dem nach oben weisenden Rand des Festelektrolyten 3 abgestützt. Das Dichtungselement 14 ist so breit ausgebildet wie die Unterseite des Flansches 6F. Es weist Ausnehmungen 14A auf, in die der obere Randbereich des Festelektrolyten 3 eingesetzt ist. Zwischen dem oberen Rand des Festelektrolyten 3 und der Kartusche 6 ist ein weiteres Dichtungselement 22 angeordnet, das aus Graphit gefertigt und ringförmig ausgebildet ist. Der obere Teilbereich dieses Dichtungselementes 22 ist ebenfalls in die Ausnehmung 14A des Dichtungselementes 14 eingesetzt. Das Dichtungselement 22 hat die Aufgabe, den Anodenraum 4 vollständig nach außenhin abzudichten, so daß keinerlei Kontakt zwischen dem Natrium und dem Dichtungselement 14 entsteht, das aus einem Elastomer gefertigt ist. Das Gehäuse 2 besitzt einen nach innen weisenden Flansch 2F, der über ein Dichtungselement 15 auf dem Flansch 6F der Kartusche 6 abgestützt ist. Das Dichtungselement 15 ist ringförmig ausgebildet und weist eine ringförmige Ausnehmung 15A auf, in welche der Randbereich des Flansches 6F und der seitliche Bereich der Dichtung 14 eingesetzt ist. Zwischen dem Boden des Gehäuses 2 und der runden Kuppe 3K des Festelektrolyten 3 ist wiederum eine Zentriereinrichtung 20 sowie eine Abstützvorrichtung 21 vorgesehen, wodurch sichergestellt wird, daß der Festelektrolyt 3 trotz Verwendung von elastischen Dichtungselementen in der erforderlichen Position gehalten wird.

## Patentansprüche

1. Elektrochemische Speicherzelle (1) auf der Basis von Natrium und Schwefel mit einem Anodenraum (4) und einem Kathodenraum (5), die durch einen eine mit Natrium gefüllte und mit einem Flansch (6F) versehene Kartusche (6) enthaltenden Festelektrolyten (3) voneinander getrennt und von einem metallischen Gehäuse (2) nach außen hin begrenzt sind, das ein Verschlußelement (11) mit elastischen Dichtungselementen (14, 15, 22) aufweist, dadurch gekennzeichnet, daß das Gehäuse (2) an seinem offenen Ende einen nach innen weisenden Flansch (2F) und das als Zylinder ausgebildete Verschlußelement (11) zwei nach innen gerichtete Flansche (11A, 11B) aufweist, wovon der erste Flansch (11A) auf den Flansch (2F) des Gehäuses (2) aufgesetzt ist und beide Flansche (2F und 11A) bis zum Festelektrolyten (3) geführt und ihre freien Enden zur Ausbildung einer V-förmigen Rinne (13), in der ein aus einem Elastomer gefertigtes Dichtungselement (14) geschützt angeordnet ist, nach oben bzw. unten gebogen sind, daß auf dem Rand des Festelektrolyten (3) eine Glasschicht (9) aufgetragen ist, über der eine Isolierschicht (10) und eine Graphitdichtung (8) angeordnet sind, auf welcher der über den Festelektrolyten (3) nach außen überstehende und die Breite der Graphitdichtung (8) aufweisende Flansch (6F) der Kartusche (6) aufgesetzt ist, daß auf dem nach oben weisenden Rand des Flansches (6A) ein weiteres aus einem Elastomer gefertigtes Dichtungselement (15) geschützt angeordnet ist, auf dem der zweite nach innen weisende Flansch (11B) des Verschlußelementes (11) abgestützt ist, und daß der Innendurchmesser des zylinderförmigen Verschlußelementes (11) geringfügig größer als der Außendurchmesser des Gehäuses (2) ausgebildet und der obere Randbereich des Gehäuses (2) hiervon hüllenartig umgeben ist.

2. Elektrochemische Speicherzelle (1) auf der Basis von Natrium und Schwefel mit einem Anodenraum (4) und einem Kathodenraum (5), die durch einen eine mit Natrium gefüllte und mit einem Flansch (6F) versehene Kartusche (6) enthaltenden Festelektrolyten (3) voneinander getrennt und von einem metallischen Gehäuse (2) nach außen hin begrenzt sind, das ein Verschlußelement (11) mit elastischen Dichtungselementen (14, 15, 22) aufweist, dadurch gekennzeichnet, daß der nach außen weisende Flansch (6F) der Kartusche (6) mit dem nach oben weisenden Rand des Festelektrolyten (3) über einen Isolierring (8') aus Alpha-Aluminium-Oxid verbunden ist, daß auf einen ersten nach innen weisenden Flansch (2F) des Gehäuses (2) ein erster nach innen und außen gerichteter Flansch (11A) des Verschlußelementes (11) aufgesetzt ist, daß die beiden Flansche (2F und 11A) zur Ausbildung einer V-förmigen Rinne (13), die zur geschützen Aufnahme eines aus einem Elastomer gefertigten und gegen den Festelektrolyten (3) gepreßten Dichtungselement (14) nach oben bzw. unten gebogen sind , und daß auf die Oberseite des nach außen gerichteten Teils des Flansches (11A) ein zweiter nach innen gerichteter Flansch (2R) des Gehäuses (2) aufgesetzt ist, und der zweite nach innen weisende Flansch (11B) des Verschlußelementes (11) über ein geschützt angeordnetes und aus einem Elastomer gefertigten Dichtungselement (15) auf dem Flansch (6F) der Kartusche (6) abgestützt ist.

3.  Elektrochemische Speicherzelle (1) auf der Basis von Natrium und Schwefel mit einem Anodenraum (4) und einem Kathodenraum (5), die durch einen eine mit Natrium gefüllte und mit einem Flansch (6F) versehene Kartusche (6) enthaltenden Festelektrolyten (3) voneinander getrennt und von einem metallischen Gehäuse (2) nach außen hin begrenzt sind, das ein Verschlußelement (11) mit elastischen Dichtungselementen (14, 15, 22) aufweist, dadurch gekennzeichnet, daß der Flansch der Kartusche (6) über ein Dichtungselement (14), das aus einem Elastomer gefertigt und als Ring ausgebildet ist, auf den nach oben weisenden Rand des Festelektrolyten (3) aufgesetzt ist, daß ein zwischen der Kartusche (6) und dem Festelektrolyten (3) ausgebildeter Ringspalt (7) durch ein Dichtungselement (22) verschlossen ist, das aus Graphitfilz hergestellt und als Ring ausgebildet ist, daß das Dichtungselement (14) stufenförmige Ausnehmungen (14A) zur Aufnahme des oberen Randes des Festelektrolyten (3) und eines Teilbereichs des Dichtungselementes (22) aufweist, und daß der nach innen weisende Flansch (2F) des Gehäuses (2) über ein ringförmiges Dichtungselement (15), das aus einem Elastomer gefertigt ist, auf den Rand des Flansches (6F) der Kartusche (6) aufgesetzt ist.

4.  Speicherzelle nach einem der Ansprüche 1 bis 3, dadurch gekennzeichnet, daß die Dichtungselemente (14, 15) aus einem Elastomer, insbesondere einem Perfluorelastomer gefertigt sind.

5.  Speicherzelle nach einem der Ansprüche 1 bis 4, dadurch gekennzeichnet, daß ein durch die Flansche (11A und 11B) des Verschlußelementes (11) begrenzter Ringraum (16) einen Natriumabsorber (17) enthält.

6.  Speicherzelle nach einem der Ansprüche 1 bis 5, dadurch gekennzeichnet, daß zwischen dem Boden des Gehäuses (2) und der runden Kuppe (3K) des Festelektrolyten (3) wenigstens eine Zentriereinrichtung (20) und/oder eine Abstützvorrichtung (21) vorgesehen sind, zwischen denen die runde Kuppe (3K) des Festelektrolyten (3) eingebettet ist.

**Claims**

1.  Electrochemical storage cell (1) based on sodium and sulphur having an anode space (4) and a cathode space (5) which are separated from each other by a solid electrolyte (3) containing a cartridge (6) filled with sodium and provided with a flange (6F) and are outwardly bounded by a metallic housing (6) having a closure element (11) with elastic sealing elements (14, 15, 22), characterised in that the housing (2) has an inwardly directed flange (2F) at its open end and the closure element (11), constructed as a cylinder, has two inwardly directed flanges (11A, 11B), of which the first flange (11A) is mounted on the flange (2F) of the housing (2) and the two flanges (2F and 11A) are brought up to the solid electrolyte (3) and their free ends are bent upwards or downwards, respectively, to form a V-shaped channel (13) in which a sealing element (14) made from an elastomer is disposed in a protected manner, in that there is applied to the rim of the solid electrolyte (3) a glass layer (9) on top of which there are disposed an insulating layer (10) and a graphite seal (8) on which the flange (6F), which projects outwards over the solid electrolyte (3) and has the width of the graphite seal (8), of the cartridge (6) is mounted, in that there is disposed in a protected manner on the upwardly directed rim of the flange (6A) a further sealing element (15) which is made from an elastomer and which supports the second, inwardly directed flange (11B) of the closure element (11), and in that the inside diameter of the cylindrical closure element (11) is of slightly larger construction than the outside diameter of the housing (2) and the upper rim region of the housing (2) is surrounded in a sleeve-like manner thereby.

2. Electrochemical storage cell (1) based on sodium and sulphur having an anode space (4) and a cathode space (5) which are separated from each other by a solid electrolyte (3) containing a cartridge (6) filled with sodium and provided with a flange (6F) and are outwardly bounded by a metallic housing (2) having a closure element (11) with elastic sealing elements (14, 15, 22), characterised in that the outwardly directed flange (6F) of the cartridge (6) is joined to the upwardly directed rim of the solid electrolyte (3) by means of an α-aluminium oxide insulating ring (8'), in that a first, inwardly and outwardly directed flange (11A) of the closure element (11) is mounted on a first, inwardly directed flange (2F) of the housing (2), in that the two flanges (2F and 11A) are bent upwards and downwards, respectively, to form a V-shaped channel (13), which [lacuna] for the protected reception of a sealing element (14) made from an elastomer and pressed against the solid electrolyte (3), and in that a second, inwardly directed flange (2R) of the housing (2) is mounted on the upper side of the outwardly directed part of the flange (11A) and the second, inwardly directed flange (11B) of the closure element (11) is supported on the flange (6F) of the cartridge (6) by means of a sealing element (15) disposed in a protected manner and made of an elastomer.

3. Electrochemical storage cell (1) based on sodium and sulphur having an anode space (4) and a cathode space (5) which are separated from each other by a solid electrolyte (3) containing a cartridge (6) filled with sodium and provided with a flange (6F) and are outwardly bounded by a metallic housing (2) which has a closure element (11) with elastic sealing elements (14, 15, 22), characterised in that the flange of the cartridge (6) is mounted on the upwardly directed rim of the solid electrolyte (3) by means of a sealing element (14) which is made of an elastomer and is constructed as a ring, in that an annular gap (7) formed between the cartridge (6) and the solid electrolyte (3) is sealed by a sealing element (22) which is made of graphite felt and is constructed as a ring, in that the sealing element (14) has step-shaped recesses (14A) for receiving the upper rim of the solid electrolyte (3) and a sub-region of the sealing element (22), and in that the inwardly directed flange (2F) of the housing (2) is mounted on the rim of the flange (6F) of the cartridge (6) by means of an annular sealing element (15) which is made from an elastomer.

4. Storage cell according to one of Claims 1 to 3, characterised in that the sealing elements (14, 15) are made from an elastomer, in particular a perfluorinated elastomer.

5. Storage cell according to one of Claims 1 to 4, characterised in that an annular space (16) bounded by the flanges (11A and 11B) of the closure element (11) contains a sodium absorber (17).

6. Storage cell according to one of Claims 1 to 5, characterised in that there are provided between the base of the housing (2) and the round dome (3K) of the solid electrolyte (3) at least one centring device (20) and/or a support fixture (21) between which the round dome (3K) of the solid electrolyte (3) is embedded.

**Revendications**

1. Elément de batterie (1) électrochimique à base de sodium et de soufre comportant une chambre d'anode (4) et une chambre de cathode (5), lesquelles chambres sont séparées l'une de l'autre par un électrolyte solide (3) renfermant une cartouche (6) remplie de sodium, munie d'un rebord (6F), et sont délimitées vers l'extérieur par une enceinte métallique (2) qui comporte un élément de fermeture (11) avec des éléments d'étanchéité (14, 15, 22) élastiques, caractérisé par le fait que l'enceinte (2) présente, à son extrémité ouverte, un rebord (2F) tourné vers l'intérieur et l'élément de fermeture (11) agencé sous la forme d'un cylindre présente deux rebords (11A, 11B) tournés vers l'intérieur parmi lesquels le premier rebord (11A) est appliqué sur le rebord (2F) de l'enceinte (2), les deux rebords (2F, 11A) s'étendent jusqu'à l'électrolyte solide (3) et leurs extrémités libres sont recourbées vers le haut et vers le bas pour former une gorge (13) en forme de Vé dans laquelle est monté un élément d'étanchéité (14) en élastomère qui est ainsi protégé, par le fait qu'une couche de verre (9) est appliquée sur le bord de l'électrolyte solide (3), couche sur laquelle sont disposées une couche isolante (10) et un joint de graphite (8) sur lequel repose le rebord (6F) de la cartouche (6) qui fait saillie vers l'extérieur par rapport à l'électrolyte solide (3) et a la même largeur que le joint en graphite (8), par le fait qu'un autre élément d'étanchéité (15) en élastomère, sur lequel repose le deuxième rebord (11B) tourné vers l'intérieur de l'élément de fermeture (11), est disposé sur le bord tourné vers le haut du rebord (6A) et est ainsi protégé, et par le fait que le diamètre intérieur de l'élément de fermeture (11) est légèrement supérieur au diamètre extérieur de l'enceinte (2) et la région du bord supérieur de l'enceinte (2) est entourée par celui-ci à la manière d'une gaine.

2. Elément de batterie (1) électrochimique à base de sodium et de soufre comportant une chambre d'anode (4) et une chambre de cathode (5), lesquelles chambres sont séparées l'une de l'autre par un électrolyte solide (3) renfermant une cartouche (6) remplie de sodium, munie d'un rebord (6F), et sont délimitées vers l'extérieur par une enceinte métallique (2) qui comporte un élément de fermeture (11) avec des éléments d'étanchéité (14, 15, 22) élastiques, caractérisé par le fait que le rebord (6F) tourné vers l'extérieur de la cartouche (6) est relié au bord tourné vers le haut de l'électrolyte solide (3) par l'intermédiaire d'une bague isolante (8) en alpha-alumine, par le fait qu'un premier rebord (11A) tourné vers l'intérieur et vers l'extérieur de l'élément de fermeture (11) est appliqué sur un premier rebord (2F) tourné vers l'intérieur de l'enceinte (2), par le fait que les deux rebords (2F et 11A) sont recourbés vers le haut et vers la bas pour former une gorge (13) en forme de Vé qui reçoit et protège un élément d'étanchéité (14) en élastomère pressé contre l'électrolyte solide (3) et par le fait qu'un deuxième rebord (2R) tourné vers l'intérieur de l'enceinte (2) est appliqué sur la face supérieure de la partie tournée vers l'extérieur du rebord (11A) et le deuxième rebord (11B) tourné vers l'intérieur de l'élément de fermeture (11) repose sur le rebord (6F) de la cartouche (6) par l'intermédiaire d'un élément d'étanchéité (15) en élastomère protégé.

3. Elément de batterie (1) électrochimique à base de sodium et de soufre comportant une chambre d'anode (4) et une chambre de cathode (5), lesquelles chambres sont séparées l'une de l'autre par un électrolyte solide (3) renfermant une cartouche (6) remplie de sodium et munie d'un rebord (6F) et sont délimitées vers l'extérieur par une enceinte métallique (2) qui comporte un élément de fermeture (11) avec des éléments d'étanchéité (14, 15, 22) élastiques, caractérisé par le fait que le rebord de la cartouche (6) est monté sur le bord tourné vers le haut de l'électrolyte solide (3) par l'intermédiaire d'un élément d'étanchéité (14) en élastomère en forme de bague, par le fait qu'un espace annulaire (7) ménagé entre la cartouche (6) et l'électrolyte solide (3) est obturé au moyen d'un élément d'étanchéité (22) en feutre de graphite en forme d'anneau, par le fait que l'élément d'étanchéité (14) présente des évidements (14A) en gradins destinés à recevoir le bord supérieur de l'électrolyte solide (3) et une partie de l'élément d'étanchéité (22) et par le fait que le rebord (2F) tourné vers l'intérieur de l'enceinte (2) est monté sur le bord du rebord (6F) de la cartouche (6) par l'intermédiaire d'un élément d'étanchéité (15) annulaire en élastomère.

4. Elément de batterie selon l'une des revendications 1 à 3, caractérisé par le fait que les éléments d'étanchéité (14, 15) sont en élastomère, notamment en élastomère perfluoré.

5. Elément de batterie selon l'une des revendications 1 à 4, caractérisé par le fait qu'une chambre annulaire (16) délimitée par les rebords (11A et 11B) de l'élément de fermeture (11) contient un absorbeur de sodium (17).

6. Elément de batterie selon l'une des revendications 1 à 5, caractérisé par le fait qu'il est prévu, entre le fond de l'enceinte (2) et la calotte (3K) ronde de l'électrolyte solide (3) au moins un dispositif de centrage (20) et/ou un dispositif support 21 entre lesquels est logée la calotte (3K) ronde de l'électrolyte solide.

Fig.1

Fig.2

Fig.3